# EUROPÄISCHE PATENTSCHRIFT

(11) **EP 3 889 726 B1**
(45) Veröffentlichungstag und Bekanntmachung des Hinweises auf die Patenterteilung: **04.12.2024**
(21) Anmeldenummer: 21401014.2
(22) Anmeldetag: 15.03.2021
(51) Int. Cl.: G05D 1/00

(54) **VERFAHREN ZUM UNTERSTÜTZEN EINES GERÄTEBEDIENERS**
METHOD FOR SUPPORTING A DEVICE OPERATOR
PROCÉDÉ D'AIDE À UN OPÉRATEUR D'APPAREIL

(30) Priorität: 30.03.2020 DE 102020108653
(43) Veröffentlichungstag der Anmeldung: 06.10.2021
(73) Patentinhaber: Amazonen-Werke H. Dreyer SE & Co. KG, 49205 Hasbergen (DE)
(72) Erfinder: Kühn, Christoph, 49186 Bad Iburg (DE); Große Brinkhaus, Andre, 48149 Münster (DE); Ströbel-Fröschle, Markus, 49124 Georgsmarienhütte (DE); Horstmann, Stephan, 49479 Ibbenbüren (DE); Weinert, Benjamin, 49565 Bramsche (DE)

(56) Entgegenhaltungen:
- EP-A2- 1 847 897
- DE-A1- 102018 210 379
- US-A1- 2006 175 541
- US-A1- 2006 178 825
- US-A1- 2017 357 269

## Beschreibung

Die Erfindung betrifft ein Verfahren zum Unterstützen eines Gerätebedieners bei der Bearbeitung einer landwirtschaftlichen Nutzfläche nach dem Oberbegriff des Patentanspruchs 1, ein System zum Unterstützen eines Gerätebedieners bei der Bearbeitung einer landwirtschaftlichen Nutzfläche nach dem Oberbegriff des Patentanspruchs 11 und ein landwirtschaftliches Arbeitsgerät nach dem Oberbegriff des Patentanspruchs 13.

Die Bedienung von landwirtschaftlichen Arbeitsgeräten wird zunehmend komplizierter, sodass zur Erzielung von beabsichtigten Bearbeitungsergebnissen häufig eine Unterstützung des Gerätebedieners vor und/oder während der Bearbeitung der landwirtschaftlichen Nutzfläche erforderlich ist.

Die US 2006 178 825 A1, die US 2006 175 541 A1 und die US 2017 357 269 A1 betreffen ein Führen von landwirtschaftlichen Fahrzeugen entlang benachbarter Wege, wobei der gefahrene Weg aufgezeichnet wird. Die DE 10 2018 210 379 A1 beschreibt ein Wendesteuersystem, welches auf Grundlage von manuell gefahrenen Wendemanövern Wendeformen erlernen kann. Die EP 1 847 897 A2 ein Lernen von Vorgewende-Arbeitsschrittsequenzen und deren Anpassung an eine aktuelle Vorgewendefahrspur.

Aus der Druckschrift EP 2 583 544 B1 ist beispielsweise eine landwirtschaftliche Arbeitsmaschine bekannt, welche eine Vorrichtung zur Visualisierung von Steuerungsabläufen aufweist. Zur Unterstützung des Bedieners des landwirtschaftlichen Arbeitsgeräts werden diesem über grafische Abbildungen Steuerungsabläufe entlang der zurückzulegenden Fahrstrecke in der Reihenfolge ihrer Abarbeitung in der Visualisierungseinrichtung angezeigt. Die abzuarbeitende Steuersequenz ist dabei vor dem eigentlichen Bearbeitungsvorgang durch den Gerätebediener manuell einzuprogrammieren.

Bei der Bearbeitung von landwirtschaftlichen Nutzflächen ist es bereits üblich, Steuerungsinformationen zu Steuerungsmaßnahmen aufzuzeichnen, um entsprechende Informationen bei einem nachfolgenden Bearbeitungsvorgang mit einem anderen landwirtschaftlichen Arbeitsgerät zu nutzen. In diesem Zusammenhang ist beispielsweise die Aufzeichnung einer angelegten Fahrgasse bekannt, welche beim Bearbeiten der landwirtschaftlichen Nutzfläche mit einem anderen landwirtschaftlichen Arbeitsgerät zu einem späteren Zeitpunkt verwendet werden kann.

Im Hinblick auf wiederkehrende Bearbeitungsvorgänge, welche beispielsweise in einem mehrmonatigen, einem einjährigen oder einem mehrjährigen Zyklus auf einer landwirtschaftlichen Nutzfläche mit dem gleichen landwirtschaftlichen Arbeitsgerät oder mit ähnlichen landwirtschaftlichen Arbeitsgeräten des gleichen Gerätetyps zu wiederholen sind, bestehen bisher keine praxistauglichen Lösungen, um den Bediener des landwirtschaftlichen Arbeitsgeräts bei der Bearbeitung der landwirtschaftlichen Nutzfläche zu unterstützen.

Die der Erfindung zugrundeliegende Aufgabe besteht somit darin, die Unterstützung eines Bedieners eines landwirtschaftlichen Arbeitsgeräts bei wiederkehrenden Bearbeitungsvorgängen auf einer landwirtschaftlichen Nutzfläche mit dem gleichen landwirtschaftlichen Arbeitsgerät oder mit ähnlichen landwirtschaftlichen Arbeitsgeräten des gleichen Gerätetyps zu verbessern.

Die Aufgabe wird gelöst durch die kennzeichnenden Merkmale des Anspruches 1.

Die Erfindung macht sich die Erkenntnis zunutze, dass während einer Ausgangsbearbeitung einer landwirtschaftlichen Nutzfläche aufgezeichnete Steuerungsinformationen zu Steuerungsmaßnahmen bei einer Folgebearbeitung zur Unterstützung des Gerätebedieners wiederverwendbar sind, sofern die Folgebearbeitung der Ausgangsbearbeitung entsprechen soll. Die Folgebearbeitung der landwirtschaftlichen Nutzfläche wird somit erheblich vereinfacht, da die aufgezeichneten Steuerungsinformationen zu den während der Ausgangsbearbeitung ausgeführten Steuerungsmaßnahmen als Grundlage für die Bearbeitung herangezogen werden können. Die Folgebearbeitung kann beispielsweise auch eine wiederholte Ausführung der Ausgangsbearbeitung während eines Arbeitsvorgangs sein, in welchem auch die Ausgangsbearbeitung erfolgt.

Die elektronische Datenverarbeitungseinrichtung, über welche die Steuerungsinformationen während der Ausgangsbearbeitung der landwirtschaftlichen Nutzfläche aufgezeichnet werden, kann ein Bestandteil der elektronischen Anzeige- und Bedieneinheit sein. Alternativ können die elektronische Datenverarbeitungseinrichtung und die elektronische Anzeige- und Bedieneinheit separat voneinander ausgebildet sein. Die elektronische Anzeige- und Bedieneinheit und/oder die elektronische Datenverarbeitungseinrichtung können Bestandteile des landwirtschaftlichen Arbeitsgeräts sein oder signalleitend mit dem landwirtschaftlichen Arbeitsgerät verbunden sein. Die elektronische Anzeige- und Bedieneinheit ist vorzugsweise ein Terminal, insbesondere ein Isobus-Terminal. Alternativ kann die elektronische Anzeige- und Bedieneinheit auch ein mobiles Endgerät, wie beispielsweise ein Smartphone oder ein Tablet-Computer, sein. Die elektronische Anzeige- und Bedieneinheit kann ferner sowohl ein Terminal als auch ein mobiles Endgerät umfassen, wobei in diesem Fall das mobile Endgerät beispielsweise als Anzeigeerweiterung für das Terminal eingesetzt wird. Das Aufzeichnen von Steuerungsinformationen zu Steuerungsmaßnahmen während der Ausgangsbearbeitung der landwirtschaftlichen Nutzfläche kann selbsttätig durch die elektronische Datenverarbeitungseinrichtung veranlasst werden und/oder aufgrund einer Veranlassung durch den Gerätebediener erfolgen.

Es ist bevorzugt, dass das landwirtschaftliche Arbeitsgerät, welches die Steuerungsmaßnahmen während der Ausgangsbearbeitung der landwirtschaftlichen Nutzfläche umsetzt, dasselbe landwirtschaftliche Arbeitsgerät ist, durch welches auch die Folgebearbeitung der landwirtschaftlichen Nutzfläche erfolgt. Alternativ können das landwirtschaftliche Arbeitsgerät, welches die Steuerungsmaßnahmen während der Ausgangsbearbeitung der landwirtschaftlichen Nutzfläche umsetzt, und das landwirtschaftliche Arbeitsgerät, durch welches auch die Folgebearbeitung der landwirtschaftlichen Nutzfläche erfolgt, dem gleichen Gerätetyp angehören. In diesem Fall sind beide landwirtschaftlichen Arbeitsgeräte beispielsweise eine Streumaschine, ein Spritzgerät oder eine Sämaschine.

In einer bevorzugten Ausführungsform des erfindungsgemäßen Verfahrens betreffen die durch die elektronische Datenverarbeitungseinrichtung während der Ausgangsbearbeitung der landwirtschaftlichen Nutzfläche aufgezeichneten Steuerungsinformationen von einem Gerätebediener während der Ausgangsbearbeitung auf der landwirtschaftlichen Nutzfläche manuell veranlasste Steuerungsmaßnahmen. Die elektronische Datenverarbeitungseinrichtung kann also dazu eingerichtet sein, manuell von einem Gerätebediener vorgenommene Veränderungen der Geräteeinstellungen während der Ausgangsbearbeitung der landwirtschaftlichen Nutzfläche zu erfassen und zu speichern. Alternativ oder zusätzlich betreffen die durch die elektronische Datenverarbeitungseinrichtung während der Ausgangsbearbeitung der landwirtschaftlichen Nutzfläche aufgezeichneten Steuerungsinformationen von dem landwirtschaftlichen Arbeitsgerät während der Ausgangsbearbeitung der landwirtschaftlichen Nutzfläche selbsttätig veranlasste Steuerungsmaßnahmen. Insbesondere bei einer automatisierten oder teilautomatisierten Bearbeitung einer landwirtschaftlichen Nutzfläche kommt es während der Bearbeitung mehrfach zu einer selbsttätigen Veranlassung von Steuerungsmaßnahmen, sodass die Anzahl der notwendigen manuellen Steuerungseingriffe durch einen Gerätebediener reduziert werden. Die elektronische Datenverarbeitungseinrichtung kann also dazu eingerichtet sein, die während einer automatisierten oder teilautomatisierten Bearbeitung einer landwirtschaftlichen Nutzfläche veranlassten Steuerungsmaßnahmen zu erfassen und zu speichern.

Es ist ferner ein erfindungsgemäßes Verfahren vorteilhaft, bei welchem aufgezeichnete Steuerungsinformationen zu zumindest einzelnen während der Ausgangsbearbeitung der landwirtschaftlichen Nutzfläche umgesetzten Steuerungsmaßnahmen bei der Folgebearbeitung der landwirtschaftlichen Nutzfläche durch die elektronische Anzeige- und Bedieneinheit optisch angezeigt werden. Die elektronische Anzeige- und Bedieneinheit weist zum optischen Anzeigen von Steuerungsinformationen vorzugsweise ein Display, insbesondere einen Touchscreen, auf. Die elektronische Anzeige- und Bedieneinheit ist vorzugsweise dazu eingerichtet, die aufgezeichneten Steuerungsinformationen zu Steuerungsmaßnahmen der Ausgangsbearbeitung von einem Speicher abzurufen und dem Gerätebediener anzuzeigen, damit der Gerätebediener während der Folgebearbeitung den Ablauf der Ausgangsbearbeitung der landwirtschaftlichen Nutzfläche berücksichtigten kann.

Im erfindungsgemäßen Verfahren werden georeferenzierte Maßnahmenpositionen des landwirtschaftlichen Arbeitsgeräts bei der Umsetzung von Steuerungsmaßnahmen während der Ausgangsbearbeitung der landwirtschaftlichen Nutzfläche durch die elektronische Datenverarbeitungseinrichtung aufgezeichnet. Während der Ausgangsbearbeitung erfolgt also eine Georeferenzierung der Steuerungsinformationen zu den während der Ausgangsbearbeitung der landwirtschaftlichen Nutzfläche von dem landwirtschaftlichen Arbeitsgerät umgesetzten Steuerungsmaßnahmen. Hierzu weist die elektronische Datenverarbeitungseinrichtung eine Positionserfassungseinrichtung auf oder ist mit einer Positionserfassungseinrichtung signalleitend verbunden. Die Positionserfassung über die Positionserfassungseinrichtung erfolgt vorzugsweise satellitengestützt. Die Positionserfassung erfolgt zur Georeferenzierung der Maßnahmenpositionen, wobei die Georeferenzierung der Maßnahmenpositionen beispielsweise satellitengestützt erfolgen kann. Aufgezeichnete Steuerungsinformationen zu zumindest einzelnen während der Ausgangsbearbeitung der landwirtschaftlichen Nutzfläche umgesetzten Steuerungsmaßnahmen werden bei der Folgebearbeitung der landwirtschaftlichen Nutzfläche durch die elektronische Anzeige- und Bedieneinheit an deren jeweiliger georeferenzierter Maßnahmenposition, vorzugsweise auf einer dargestellten Karte optisch, räumlich abgebildet. Die durch die elektronische Anzeige- und Bedieneinheit abgebildete Karte kann eine thematische Karte zur Visualisierung von georeferenzierten Maßnahmenpositionen sein.

In einer weiteren bevorzugten Ausführungsform des erfindungsgemäßen Verfahrens erfolgt ein Aufzeichnen der Reihenfolge der Steuerungsmaßnahmen, welche während der Ausgangsbearbeitung der landwirtschaftlichen Nutzfläche durch das landwirtschaftliche Arbeitsgerät umgesetzt werden. Das Aufzeichnen der Reihenfolge erfolgt vorzugsweise durch die elektronische Datenverarbeitungseinrichtung. Die aufgezeichneten Maßnahmenpositionen zu zumindest einzelnen während der Ausgangsbearbeitung der landwirtschaftlichen Nutzfläche umgesetzten Steuerungsmaßnahmen werden bei der Folgebearbeitung der landwirtschaftlichen Nutzfläche durch die elektronische Anzeige- und Bedieneinheit in der aufgezeichneten Reihenfolge, vorzugsweise auf einer dargestellten Karte optisch, räumlich abgebildet. Es erfolgt folglich eine georeferenzierte Anzeige der aufgezeichneten Steuerungsinformationen zu den während der Ausgangsbearbeitung der landwirtschaftlichen Nutzfläche von dem landwirtschaftlichen Arbeitsgerät umgesetzten Steuerungsmaßnahmen.

In einer weiteren bevorzugten Ausführungsform des erfindungsgemäßen Verfahrens wird auf Basis von Steuerungsinformationen zu Steuerungsmaßnahmen, welche während der Ausgangsbearbeitung der landwirtschaftlichen Nutzfläche aufgezeichnet wurden, eine Umsetzung zumindest einzelner während der Ausgangsbearbeitung der landwirtschaftlichen Nutzfläche umgesetzter Steuerungsmaßnahmen durch das landwirtschaftliche Arbeitsgerät bei der Folgebearbeitung der landwirtschaftlichen Nutzfläche veranlasst. Die Veranlassung kann dabei selbsttätig durch die elektronische Datenverarbeitungseinrichtung oder durch eine manuelle Auswahl des Gerätebedieners erfolgen. Beispielsweise werden dem Gerätebediener bei der Folgebearbeitung der landwirtschaftlichen Nutzfläche Steuerungsinformationen zu zumindest einzelnen während der Ausgangsbearbeitung der landwirtschaftlichen Nutzfläche umgesetzten Steuerungsmaßnahmen angezeigt, sodass der Gerätebediener die Umsetzung der angezeigten Steuerungsmaßnahmen durch das landwirtschaftliche Arbeitsgerät über eine manuelle Auswahl veranlassen kann.

Darüber hinaus ist ein erfindungsgemäßes Verfahren vorteilhaft, bei welchem das Aufzeichnen von Steuerungsinformationen zu Steuerungsmaßnahmen ein Speichern der Steuerungsinformationen auf einem internen Datenspeicher der elektronischen Datenverarbeitungseinrichtung und/oder einem externen Datenspeicher umfasst. Zum Speichern der Steuerungsmaßnahmen auf einem externen Speicher kann die elektronische Datenverarbeitungseinrichtung über Funk und/oder eine Internetverbindung und/oder über eine kabelgebundene Datenleitung mit dem externen Datenspeicher verbunden sein. Über die Funk- und/oder Internetverbindung kann sowohl ein Speichern als auch ein Abrufen der Steuerungsinformationen auf dem bzw. von dem externen Speicher erfolgen. Vor dem Verwenden der aufgezeichneten Steuerungsinformationen zu zumindest einzelnen während der Ausgangsbearbeitung umgesetzten Steuerungsmaßnahmen bei der Folgebearbeitung erfolgt vorzugsweise ein Abruf der gespeicherten Steuerungsinformationen von dem internen Datenspeicher der elektronischen Anzeige- und Bedieneinheit und/oder dem externen Datenspeicher durch die elektronische Datenverarbeitungseinrichtung. Die während der Ausgangsbearbeitung aufgezeichneten Steuerungsinformationen können in einem Datenpaket zusammengefasst sein, sodass durch einen Abruf des Datenpakets sämtliche Steuerungsinformationen der Ausgangsbearbeitung zur Verfügung stehen. Ferner können die Datenpakte auch auf weitere Drittgeräte, wie beispielsweise ein weiteres Terminal oder ein mobiles Endgerät, übertragen werden.

Es ist außerdem ein erfindungsgemäßes Verfahren vorteilhaft, bei welchem der Fahrweg des landwirtschaftlichen Arbeitsgeräts während der Ausgangsbearbeitung der landwirtschaftlichen Nutzfläche durch die elektronische Datenverarbeitungseinrichtung aufgezeichnet wird. Zum Aufzeichnen des Fahrwegs umfasst die elektronische Datenverarbeitungseinrichtung vorzugsweise eine Positionserfassungseinrichtung oder ist signalleitend mit einer Positionserfassungseinrichtung verbunden. Die Fahrwegaufzeichnung kann beispielsweise satellitengestützt erfolgen. Der während der Ausgangsbearbeitung der landwirtschaftlichen Nutzfläche aufgezeichnete Fahrweg wird vorzugsweise bei der Folgebearbeitung der landwirtschaftlichen Nutzfläche durch die elektronische Anzeige- und/oder Bedieneinheit optisch abgebildet und/oder zur Erzeugung von optischen Navigationshinweisen verwendet. Alternativ oder zusätzlich kann der während der Ausgangsbearbeitung der landwirtschaftlichen Nutzfläche aufgezeichnete Fahrweg auch zur Erzeugung von Lenkbefehlen Verwendung finden, welche an ein das landwirtschaftliche Arbeitsgerät tragendes Trägerfahrzeug oder ein das landwirtschaftliche Arbeitsgerät ziehendes Zugfahrzeug vor oder während der Folgebearbeitung übermittelt werden können.

Das erfindungsgemäße Verfahren wird ferner durch ein nachträgliches Modifizieren von aufgezeichneten Steuerungsinformationen zu zumindest einzelnen während der Ausgangsbearbeitung der landwirtschaftlichen Nutzfläche umgesetzten Steuerungsinformationen weitergebildet. Das Modifizieren der aufgezeichneten Steuerungsinformationen kann unter Verwendung eines Touchscreens der Anzeige- und Bedieneinheit und/oder gestengesteuert erfolgen. Im Rahmen des erfindungsgemäßen Verfahrens kann auch ein nachträgliches Modifizieren von während der Ausgangsbearbeitung aufgezeichneten georeferenzierten Maßnahmenpositionen erfolgen. Die nachträglich modifizierten Steuerungsinformationen zu zumindest einzelnen während der Ausgangsbearbeitung der landwirtschaftlichen Nutzfläche umgesetzten Steuerungsmaßnahmen werden durch die elektronische Anzeige- und Bedieneinheit bei der Folgebearbeitung der landwirtschaftlichen Nutzfläche mit dem landwirtschaftlichen Arbeitsgerät verwendet. Somit kann der Gerätebediener auch unterstützt werden, wenn die Folgebearbeitung von der Ausgangsbearbeitung abweichen soll. Die Steuerungsinformationen zu den Steuerungsmaßnahmen, welche bei der Folgebearbeitung nicht oder in anderer Art und Weise umgesetzt werden sollen, sind also nach der Ausgangsbearbeitung nachträglich zu modifizieren.

In einer anderen Ausführungsform des erfindungsgemäßen Verfahrens erfolgt ein nachträgliches Modifizieren des während der Ausgangsbearbeitung der landwirtschaftlichen Nutzfläche durch die elektronische Datenverarbeitungseinrichtung aufgezeichneten Fahrwegs des landwirtschaftlichen Arbeitsgeräts. Im Rahmen der Fahrwegmodifikationen können beispielsweise Wegpunkte hinzugefügt und/oder gelöscht werden. Das Modifizieren des aufgezeichneten Fahrwegs kann unter Verwendung eines Touchscreens der Anzeige- und Bedieneinheit und/oder gestengesteuert erfolgen.

Den aufgezeichneten Steuerungsinformationen zu zumindest einzelnen während der Ausgangsbearbeitung der landwirtschaftlichen Nutzfläche umgesetzten Steuerungsmaßnahmen kann ferner ein Erforderlichkeitsstatus für die Folgebearbeitung zugewiesen werden. Über den Erforderlichkeitsstatus können Steuerungsmaßnahmen als erforderlich oder als nicht-erforderlich kategorisiert werden. Erforderliche Maßnahmen werden bei der Folgebearbeitung von der Anzeige- und Bedieneinheit verwendet, beispielsweise angezeigt. Nicht-erforderliche Maßnahmen werden bei der Folgebearbeitung nicht berücksichtigt, also beispielsweise auch nicht angezeigt. Die während der Ausgangsbearbeitung aufgezeichneten Steuerungsinformationen zu den nicht-erforderlichen Steuerungsmaßnahmen werden jedoch nicht gelöscht, sondern bleiben erhalten, sodass diese bei einer späteren abweichenden Folgebearbeitung wiederverwendet werden können.

In einer weiteren bevorzugten Ausführungsform des erfindungsgemäßen Verfahrens umfasst das nachträgliche Modifizieren von aufgezeichneten Steuerungsinformationen zu zumindest einzelnen während der Ausgangsbearbeitung der landwirtschaftlichen Nutzfläche umgesetzten Steuerungsmaßnahmen ein Ändern, Löschen und/oder Hinzufügen von Steuerungsinformationen. Das nachträgliche Modifizieren von aufgezeichneten georeferenzierten Maßnahmenpositionen kann das Ändern, Löschen und/oder Hinzufügen von Positionsinformationen umfassen. Die während der Ausgangsbearbeitung aufgezeichneten Steuerungsinformationen und/oder georeferenzierten Maßnahmenpositionen können durch ein Ändern editiert und/oder korrigiert werden. Das nachträgliche Modifizieren der während der Ausgangsbearbeitung aufgezeichneten Steuerungsinformationen und/oder der während der Ausgangsbearbeitung aufgezeichneten georeferenzierten Maßnahmenpositionen kann während der Ausgangsbearbeitung, vor der Folgebearbeitung oder während der Folgebearbeitung erfolgen. Das Modifizieren der aufgezeichneten Maßnahmenpositionen kann unter Verwendung eines Touchscreens der Anzeige- und Bedieneinheit und/oder gestengesteuert erfolgen.

Das erfindungsgemäße Verfahren wird ferner dadurch vorteilhaft weitergebildet, dass das landwirtschaftliche Arbeitsgerät eine Streumaschine, insbesondere ein Düngerstreuer ist, und die Bearbeitung der landwirtschaftlichen Nutzfläche die Ausbringung von Streugut betrifft. In diesem Fall können die Steuerungsmaßnahmen die Aktivierung oder Deaktivierung einer Grenz-, Rand- oder Grabenstreufunktion der Streumaschine betreffen.

Alternativ ist das landwirtschaftliche Arbeitsgerät ein Spritzgerät, insbesondere eine Feldspritze und die Bearbeitung der landwirtschaftlichen Nutzfläche betrifft die Ausbringung von Spritzflüssigkeit. In diesem Fall können die Steuerungsmaßnahmen die Aktivierung oder Deaktivierung von Spritzdüsen und/oder eine Änderung von deren Ausbringcharakteristik betreffen, beispielsweise zur Abdriftminderung.

Alternativ kann das landwirtschaftliche Arbeitsgerät eine Sämaschine sein und die Bearbeitung der landwirtschaftlichen Nutzfläche betrifft die Ausbringung von Saatgut.

Die der Erfindung zugrundeliegende Aufgabe wird ferner durch ein System der eingangs genannten Art gelöst, wobei das erfindungsgemäße System nach den kennzeichnenden Merkmalen des Anspruches 11 eingerichtet ist.

Insbesondere ist die elektronische Datenverarbeitungseinrichtung des erfindungsgemäßen Systems dazu eingerichtet, ein optisches Anzeigen der aufgezeichneten Steuerungsinformationen zu zumindest einzelnen während der Ausgangsbearbeitung der landwirtschaftlichen Nutzfläche umgesetzten Steuerungsmaßnahmen bei der Folgebearbeitung der landwirtschaftlichen Nutzfläche durch die elektronische Anzeige- und Bedieneinheit zu veranlassen. Alternativ oder zusätzlich ist die elektronische Datenverarbeitungseinrichtung dazu eingerichtet, eine Umsetzung zumindest einzelner während der Ausgangsbearbeitung der landwirtschaftlichen Nutzfläche umgesetzter Steuerungsmaßnahmen durch das landwirtschaftliche Arbeitsgerät bei der Folgebearbeitung der landwirtschaftlichen Nutzfläche zu veranlassen. Das Veranlassen der Steuerungsmaßnahmenumsetzung erfolgt vorzugsweise selbsttätig oder nach einer manuellen Auswahl des Gerätebedieners.

In einer besonders bevorzugten Ausführungsform des erfindungsgemäßen Systems ist dieses dazu eingerichtet, das Verfahren zum Unterstützen eines Gerätebedieners nach einer der vorstehend beschriebenen Ausführungsformen auszuführen. Hinsichtlich der Vorteile und Modifikationen dieses Systems wird auf die Vorteile und Modifikationen des erfindungsgemäßen Verfahrens verwiesen.

Die der Erfindung zugrundeliegende Aufgabe wird ferner durch ein landwirtschaftliches Arbeitsgerät der eingangs genannten Art gelöst, wobei das System des erfindungsgemäßen landwirtschaftlichen Arbeitsgeräts nach einer der vorstehend beschriebenen Ausführungsformen ausgebildet ist. Hinsichtlich der Vorteile und Modifikationen des erfindungsgemäßen landwirtschaftlichen Arbeitsgeräts wird somit auf die Vorteile und Modifikationen des erfindungsgemäßen Systems und die Vorteile und Modifikationen des erfindungsgemäßen Verfahrens verwiesen.

Das landwirtschaftliche Arbeitsgerät kann beispielsweise eine Streumaschine, insbesondere ein Düngerstreuer, sein. Alternativ kann das landwirtschaftliche Arbeitsgerät ein Spritzgerät, insbesondere eine Feldspritze, sein. Ferner kann das landwirtschaftliche Arbeitsgerät eine Sämaschine sein.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Systems in einer schematischen Darstellung;
- Fig. 2: ein weiteres Ausführungsbeispiel des erfindungsgemäßen Systems in einer schematischen Darstellung;
- Fig. 3: einen Display einer Anzeige- und Bedieneinheit während des Ausführens des erfindungsgemäßen Verfahrens;
- Fig. 4: den in der Fig. 3 abgebildeten Display nach der Auswahl einer Maßnahmenposition; und
- Fig. 5: eine Detaildarstellung der in der Fig. 4 abgebildeten Informationsübersicht zu Steuerungsmaßnahmen, welche während einer Ausgangsbearbeitung an einer Maßnahmenposition aufgezeichnet wurden.

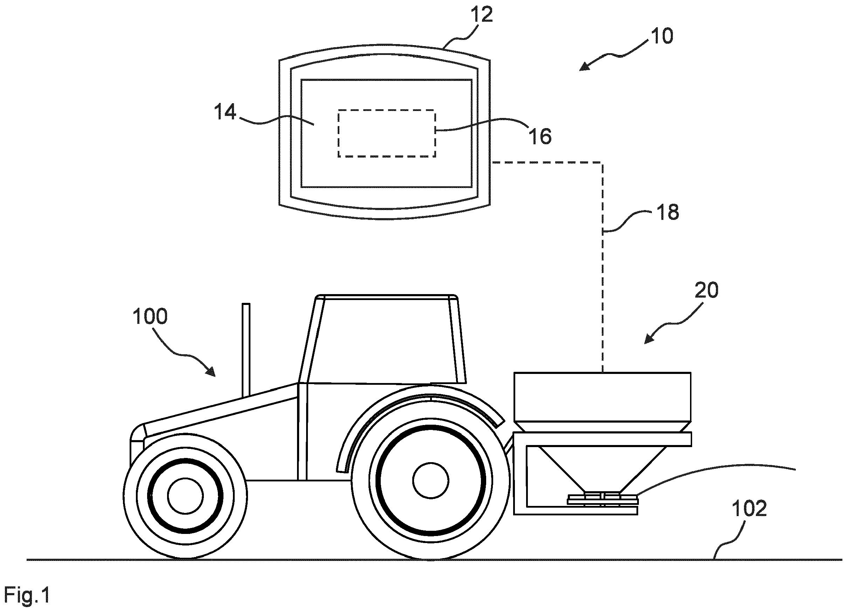

Die Fig. 1 zeigt ein System 10 zum Unterstützen eines Bedieners eines landwirtschaftlichen Arbeitsgeräts 20 bei der Bearbeitung einer landwirtschaftlichen Nutzfläche 102.

Bei dem dargestellten landwirtschaftlichen Arbeitsgerät 20 handelt es sich um eine Streumaschine, nämlich einen Düngerstreuer. Alternativ könnte das landwirtschaftliche Arbeitsgerät 20 auch ein Spritzgerät, beispielsweise eine Feldspritze, oder eine Sämaschine sein.

Das landwirtschaftliche Arbeitsgerät 20 ist über eine signalleitende Verbindung 18 mit einer Anzeige- und Bedieneinheit 12 verbunden. Die signalleitende Verbindung 18 kann dabei eine Direktverbindung zwischen dem landwirtschaftlichen Arbeitsgerät 20 und der Anzeige- und Bedieneinheit 12 sein. Alternativ kann die signalleitende Verbindung 18 auch eine indirekte Verbindung sein, bei welcher Signale zwischen dem landwirtschaftlichen Arbeitsgerät 20 und der Anzeige- und Bedieneinheit 12 über ein Kommunikationssystem des Trägerfahrzeugs 100 übermittelt werden. Beispielsweise kann die Anzeige- und Bedieneinheit 12 ein Terminal, insbesondere ein Isobus-Terminal, sein, welches signalleitend mit einem Bussystem des Trägerfahrzeugs 100 verbunden ist. Die Verbindung 18 zwischen dem landwirtschaftlichen Arbeitsgerät 20 und der elektronischen Anzeige- und Bedieneinheit 12 kann drahtlos und/oder kabelgebunden sein.

Die Anzeige- und Bedieneinheit 12 weist eine elektronische Datenverarbeitungseinrichtung 16 auf, über welche Steuerungsinformationen zu Steuerungsmaßnahmen, welche von dem landwirtschaftlichen Arbeitsgerät 20 während einer Bearbeitung einer landwirtschaftlichen Nutzfläche 102 umgesetzt werden, aufgezeichnet werden können.

Bei dem in der Fig. 1 dargestellten System 10 kann beispielsweise zusätzlich ein mobiles Endgerät, etwa ein Smartphone, als Displayerweiterung für die Anzeige- und Bedieneinheit 12 zum Einsatz kommen.

Über das als Touchscreen ausgebildete Display 14 der Anzeige- und Bedieneinheit 12 können die aufgezeichneten Steuerungsinformationen dann bei einer Folgebearbeitung der landwirtschaftlichen Nutzfläche 102 mit dem landwirtschaftlichen Arbeitsgerät 20, beispielsweise im Folgejahr, angezeigt werden, um den Bediener des landwirtschaftlichen Arbeitsgeräts 20 während der Folgebearbeitung der landwirtschaftlichen Nutzfläche 102 zu unterstützen.

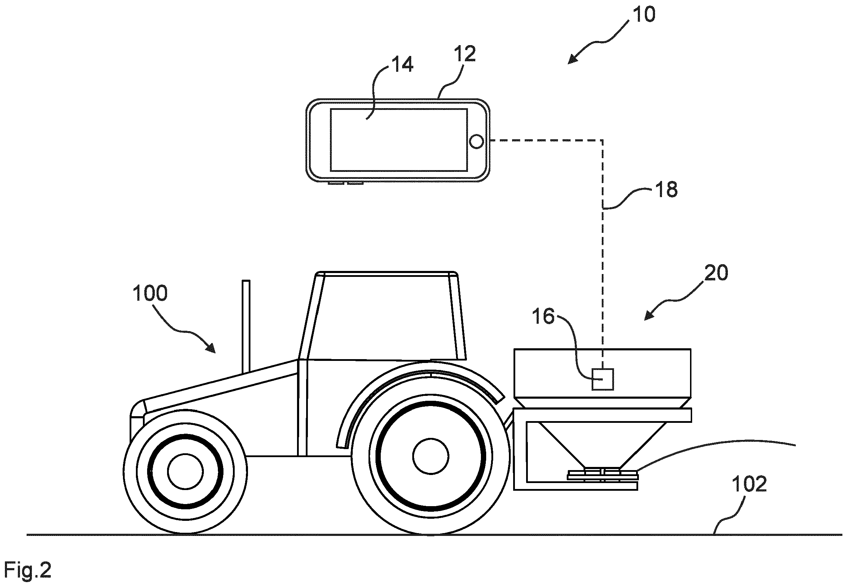

Bei dem in der Fig. 2 dargestellten System 10 ist die Anzeige- und Bedieneinheit 12 als mobiles Endgerät, nämlich als Smartphone, ausgebildet. Die elektronische Datenverarbeitungseinrichtung 16, welche zum Aufzeichnen von Steuerungsinformationen während der Bearbeitung der landwirtschaftlichen Nutzfläche 102 dient, ist in diesem Ausführungsbeispiel Bestandteil des landwirtschaftlichen Arbeitsgeräts 20. Die elektronische Datenverarbeitungseinrichtung 16 und die Anzeige- und Bedieneinheit 12 sind über die signalleitende Verbindung 18 miteinander verbunden. Das landwirtschaftliche Arbeitsgerät 20 ist erneut eine Streumaschine, nämlich ein Düngerstreuer.

In einer alternativen Ausführungsform kann die Datenverarbeitungseinrichtung 16 auch Bestandteil der als mobiles Endgerät ausgebildeten Anzeige- und Bedieneinheit 12 sein.

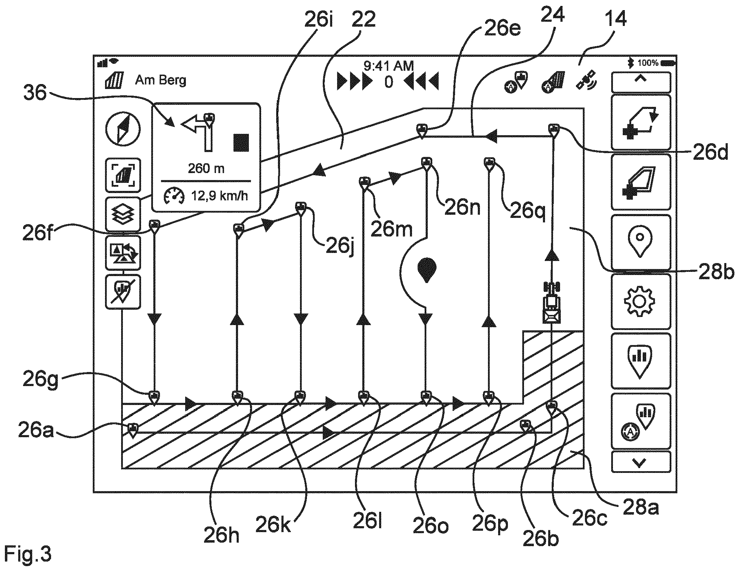

Mit den in den Fig. 1 und 2 dargestellten Systemen 10 lassen sich Steuerungsinformationen zu Steuerungsmaßnahmen, welche von dem landwirtschaftlichen Arbeitsgerät 20 während einer Ausgangsbearbeitung der landwirtschaftlichen Nutzfläche 102 umgesetzt werden, gleichermaßen aufzeichnen, wobei das Aufzeichnen der Steuerungsinformationen zu den Steuerungsmaßnahmen durch die elektronische Datenverarbeitungseinrichtung 16 erfolgt. Das Aufzeichnen der Steuerungsinformationen zu den Steuerungsmaßnahmen während der Ausgangsbearbeitung der landwirtschaftlichen Nutzfläche 102 kann dabei selbsttätig durch die elektronische Datenverarbeitungseinrichtung 16 und/oder aufgrund einer Veranlassung durch den Gerätebediener erfolgen. Neben den Steuerungsinformationen werden von der elektronischen Datenverarbeitungseinrichtung 16 außerdem georeferenzierte Maßnahmenpositionen 26a-26q (vgl. Fig. 3) des landwirtschaftlichen Arbeitsgeräts 20 aufgezeichnet, wobei die georeferenzierten Maßnahmenpositionen 26a-26q Steuerungsmaßnahmen zugeordnet werden können, welche während der Ausgangsbearbeitung der landwirtschaftlichen Nutzfläche 102 umgesetzt werden. Außerdem wird die Reihenfolge der Steuerungsmaßnahmen, welche während der Ausgangsbearbeitung der landwirtschaftlichen Nutzfläche 102 durch das landwirtschaftliche Arbeitsgerät 20 umgesetzt werden, durch die elektronische Datenverarbeitungseinrichtung 16 aufgezeichnet. Ferner zeichnet die elektronische Datenverarbeitungseinrichtung 16 den Fahrweg 24 des landwirtschaftlichen Arbeitsgeräts 20 während der Ausgangsbearbeitung der landwirtschaftlichen Nutzfläche 102 auf.

Die von der elektronischen Datenverarbeitungseinrichtung 16 aufgezeichneten Steuerungsinformationen, Maßnahmenpositionen sowie der von der elektronischen Datenverarbeitungseinrichtung 16 aufgezeichnete Fahrweg 24 werden auf einem Datenspeicher gespeichert. Der Datenspeicher kann entweder ein interner Datenspeicher der elektronischen Datenverarbeitungseinrichtung 16 oder ein externer Datenspeicher sein. Wenn ein externer Datenspeicher verwendet wird, ist die elektronische Datenverarbeitungseinrichtung 16 beispielsweise über Funk und/oder eine Internetverbindung mit dem externen Datenspeicher zum Speichern und/oder Abrufen von Daten verbunden.

Die abgespeicherten Informationen zu der Ausgangsbearbeitung können zum Unterstützen des Gerätebedieners bei einer Folgebearbeitung der landwirtschaftlichen Nutzfläche 102 mit dem landwirtschaftlichen Arbeitsgerät 20 wiederverwendet werden.

Die Fig. 3 zeigt das Display 14 der Anzeige- und Bedieneinheit 12 bei einer Folgebearbeitung der landwirtschaftlichen Nutzfläche 102 mit dem landwirtschaftlichen Arbeitsgerät 20. Auf dem Display wird eine Karte 22 wiedergegeben, in welcher der während der Ausgangsbearbeitung der landwirtschaftlichen Nutzfläche 102 aufgezeichnete Fahrweg 24 vermerkt ist. Der während der Ausgangsbearbeitung der landwirtschaftlichen Nutzfläche 102 aufgezeichnete Fahrweg 24 wird ferner zur Erzeugung von optischen Navigationshinweisen 36 genutzt, welche dem Gerätebediener bei der Folgebearbeitung ebenfalls über das Display 14 angezeigt werden. Die Karte 22 weist außerdem ein Flächensegment 28a aus, in welchem die Folgebearbeitung bereits durchgeführt wurde. Ferner weist die Karte 22 ein Flächensegment 28b aus, in welchem die Folgebearbeitung noch aussteht.

Entlang des visualisierten Fahrwegs 24 sind mehrere Maßnahmenpositionen 26a-26q abgebildet. An den Maßnahmenpositionen 26a-26q sind während der Ausgangsbearbeitung Steuerungsmaßnahmen umgesetzt worden. Damit dem Gerätebediener die den jeweiligen Maßnahmenpositionen 26a-26q zugeordneten Steuerungsinformationen, welche während der Ausgangsbearbeitung der landwirtschaftlichen Nutzfläche 102 aufgezeichnet wurden, angezeigt werden, ist das als Touchscreen ausgebildete Display 14 an der auszuwählenden Maßnahmenposition 26a-26q zu berühren.

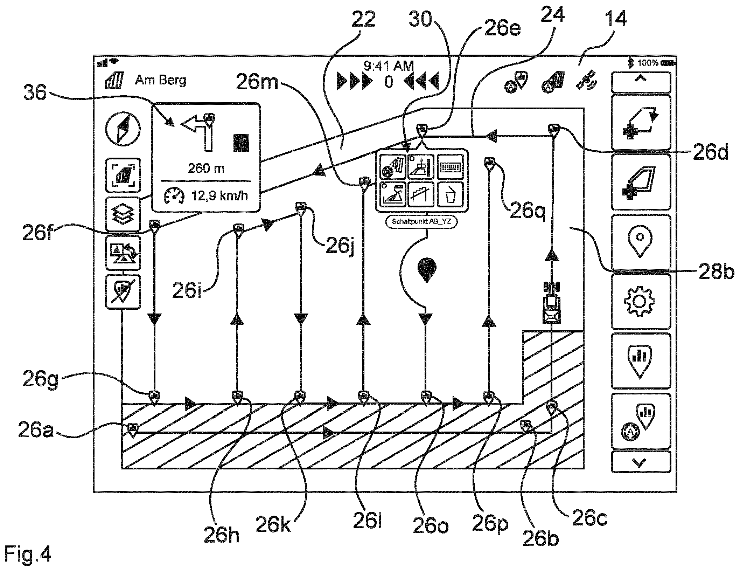

Wenn der Gerätebediener eine Maßnahmenposition 26a-26q durch eine Displayberührung auswählt, öffnet sich die in der Fig. 4 dargestellte Informationsübersicht 30, welche vorliegend der Maßnahmenposition 26e zugeordnet ist.

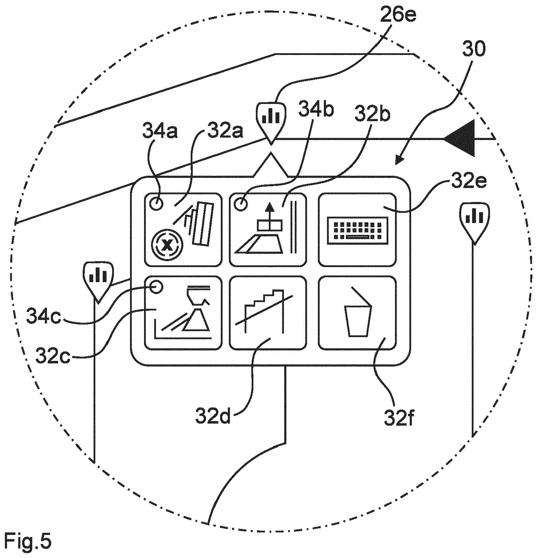

Die Fig. 5 zeigt, dass die Informationsübersicht 30 mehrere Hinweisicons 32a-32f umfasst. Die Hinweisicons 32a-32c beziehen sich auf den Status der Grenzstreufunktion, der Randstreufunktion und der Grabenstreufunktion des landwirtschaftlichen Arbeitsgeräts 20. Über die Informationselemente 34a-34c, welche den Hinweisicons 32a-32c zugeordnet sind und welche farbig aufleuchten können, werden dem Gerätebediener aufgezeichnete Steuerungsinformationen zu einzelnen während der Ausgangsbearbeitung der landwirtschaftlichen Nutzfläche 102 umgesetzten Steuerungsmaßnahmen angezeigt. Über die Informationselemente 34a-34c wird der Gerätebediener darüber informiert, ob bei der Ausgangsbearbeitung der landwirtschaftlichen Nutzfläche 102 an der ausgewählten Maßnahmenposition 26e eine Grenzstreueinrichtung, eine Randstreueinrichtung und/oder eine Grabenstreueinrichtung des landwirtschaftlichen Arbeitsgeräts 20 aktiviert oder deaktiviert wurde.

Wenn die Folgebearbeitung von der Ausgangsbearbeitung abweichen soll, hat der Gerätebediener über die Hinweisicons 32e, 32f die Möglichkeit, aufgezeichnete Steuerungsinformationen zu einzelnen während der Ausgangsbearbeitung der landwirtschaftlichen Nutzfläche 102 umgesetzten Steuerungsmaßnahmen nachträglich zu modifizieren. Über den Hinweisicon 32e kann der Benutzer die Steuerungsinformationen zu den während der Ausgangsbearbeitung durchgeführten Steuerungsmaßnahmen und/oder die Maßnahmenposition editieren oder korrigieren. Über den Hinweisicon 32f kann der Gerätebediener die Maßnahmenposition und alle damit verknüpften Maßnahmen löschen.

Nach der Ausgangsbearbeitung der landwirtschaftlichen Nutzfläche 102 kann der Gerätebediener aufgezeichneten Steuerungsinformationen zu einzelnen während der Ausgangsbearbeitung der landwirtschaftlichen Nutzfläche 102 umgesetzten Steuerungsmaßnahmen einen Erforderlichkeitsstatus für die Folgebearbeitung zuweisen. Steuerungsmaßnahmen können somit als erforderlich oder nicht-erforderlich kategorisiert werden. Erforderliche Steuerungsmaßnahmen werden bei der Folgebearbeitung von der Anzeige- und Bedieneinheit 12 verwendet, also angezeigt. Nicht-erforderliche Maßnahmen werden bei der Folgebearbeitung nicht berücksichtigt, jedoch erfolgt keine Löschung der entsprechenden Informationen, sodass diese bei einer späteren Folgebearbeitung, beispielsweise im darauffolgenden Jahr, wiederverwendet werden können.

### Bezugszeichenliste

- 10: System
- 12: Anzeige- und Bedieneinheit
- 14: Display
- 16: Datenverarbeitungseinrichtung
- 18: Verbindung
- 20: Arbeitsgerät
- 22: Karte
- 24: Fahrweg
- 26a-26q: Maßnahmenpositionen
- 28a, 28b: Flächensegmente
- 30: Informationsübersicht
- 32a-32f: Hinweisicons
- 34a-34c: Informationselemente
- 36: Navigationshinweis

- 100: Trägerfahrzeug
- 102: Nutzfläche

## Patentansprüche

1. Verfahren zum Unterstützen eines Gerätebedieners bei der Bearbeitung einer landwirtschaftlichen Nutzfläche (102), mit den Schritten:
- Aufzeichnen von Steuerungsinformationen zu Steuerungsmaßnahmen, welche von einem landwirtschaftlichen Arbeitsgerät (20) während einer Ausgangsbearbeitung der landwirtschaftlichen Nutzfläche (102) umgesetzt werden, wobei das Aufzeichnen der Steuerungsinformationen zu den Steuerungsmaßnahmen durch eine elektronische Datenverarbeitungseinrichtung (16) erfolgt;
- Aufzeichnen von georeferenzierten Maßnahmenpositionen (26a-26q) des landwirtschaftlichen Arbeitsgeräts (20) bei der Umsetzung von Steuerungsmaßnahmen während der Ausgangsbearbeitung der landwirtschaftlichen Nutzfläche (102) durch die elektronische Datenverarbeitungseinrichtung (16); und
- Verwenden von aufgezeichneten Steuerungsinformationen zu zumindest einzelnen während der Ausgangsbearbeitung der landwirtschaftlichen Nutzfläche (102) umgesetzten Steuerungsmaßnahmen durch eine elektronische Anzeige- und Bedieneinheit (12) bei einer Folgebearbeitung der landwirtschaftlichen Nutzfläche (102) mit einem landwirtschaftlichen Arbeitsgerät (20);
**dadurch gekennzeichnet, dass** aufgezeichnete Steuerungsinformationen zu zumindest einzelnen während der Ausgangsbearbeitung der landwirtschaftlichen Nutzfläche (102) umgesetzten Steuerungsmaßnahmen bei der Folgebearbeitung der landwirtschaftlichen Nutzfläche (102) über eine der Maßnahmenposition (26a-26q) zugeordnete Informationsübersicht (30) auf einem als Touchscreen ausgebildeten Display der elektronischen Anzeige- und Bedieneinheit (12) an deren jeweiliger georeferenzierter Maßnahmenposition (26a-26q), vorzugsweise auf einer dargestellten Karte (22) optisch, räumlich abgebildet werden, wenn der Gerätebediener eine Maßnahmenposition (26a-26q) durch eine Displayberührung an der auszuwählenden Maßnahmenposition (26a-26q) auswählt.

2. Verfahren nach Anspruch 1,
**dadurch gekennzeichnet, dass** das landwirtschaftliche Arbeitsgerät (20), welches die Steuerungsmaßnahmen während der Ausgangsbearbeitung der landwirtschaftlichen Nutzfläche (102) umsetzt, dasselbe landwirtschaftliche Arbeitsgerät (20) ist, durch welches auch die Folgebearbeitung der landwirtschaftlichen Nutzfläche (102) erfolgt.

3. Verfahren nach Anspruch 1 oder 2,
**dadurch gekennzeichnet, dass** aufgezeichneten Steuerungsinformationen zu zumindest einzelnen während der Ausgangsbearbeitung der landwirtschaftlichen Nutzfläche (102) umgesetzten Steuerungsmaßnahmen bei der Folgebearbeitung der landwirtschaftlichen Nutzfläche (102) durch die elektronische Anzeige- und Bedieneinheit (12) optisch angezeigt werden.

4. Verfahren nach einem der vorstehenden Ansprüche,
**gekennzeichnet durch** den Schritt:
- Aufzeichnen der Reihenfolge der Steuerungsmaßnahmen, welche während der Ausgangsbearbeitung der landwirtschaftlichen Nutzfläche (102) durch das landwirtschaftliche Arbeitsgerät (20) umgesetzt werden, wobei das Aufzeichnen der Reihenfolge durch die elektronische Datenverarbeitungseinrichtung (16) erfolgt;
wobei die aufgezeichneten Maßnahmenpositionen (26a-26q) zu zumindest einzelnen während der Ausgangsbearbeitung der landwirtschaftlichen Nutzfläche (102) umgesetzten Steuerungsmaßnahmen bei der Folgebearbeitung der landwirtschaftlichen Nutzfläche (102) durch die elektronische Anzeige- und Bedieneinheit (12) in der aufgezeichneten Reihenfolge, vorzugsweise auf einer dargestellten Karte (22) optisch, räumlich abgebildet werden.

5. Verfahren nach einem der vorstehenden Ansprüche,
**dadurch gekennzeichnet, dass** auf Basis von Steuerungsinformationen zu Steuerungsmaßnahmen, welche während der Ausgangsbearbeitung der landwirtschaftlichen Nutzfläche (102) aufgezeichnet wurden, eine Umsetzung zumindest einzelner während der Ausgangsbearbeitung der landwirtschaftlichen Nutzfläche (102) umgesetzter Steuerungsmaßnahmen durch das landwirtschaftliche Arbeitsgerät (20) bei der Folgebearbeitung der landwirtschaftlichen Nutzfläche (102), insbesondere selbsttätig oder durch eine manuelle Auswahl des Gerätebedieners, veranlasst wird.

6. Verfahren nach einem der vorstehenden Ansprüche,
**dadurch gekennzeichnet, dass** das Aufzeichnen von Steuerungsinformationen zu Steuerungsmaßnahmen ein Speichern der Steuerungsinformationen auf einem internen Datenspeicher der elektronischen Datenverarbeitungseinrichtung (16) und/oder einem externen Datenspeicher umfasst,
wobei vor dem Verwenden der aufgezeichneten Steuerungsinformationen zu zumindest einzelnen während der Ausgangsbearbeitung umgesetzten Steuerungsmaßnahmen bei der Folgebearbeitung ein Abruf der gespeicherten Steuerungsinformationen von dem internen Datenspeicher der elektronischen Anzeige- und Bedieneinheit (12) und/oder dem externen Datenspeicher durch die elektronische Datenverarbeitungseinrichtung (16) erfolgt.

7. Verfahren nach einem der vorstehenden Ansprüche,
**gekennzeichnet durch** den Schritt:
- Aufzeichnen des Fahrwegs (24) des landwirtschaftlichen Arbeitsgeräts (20) während der Ausgangsbearbeitung der landwirtschaftlichen Nutzfläche (102) durch die elektronische Datenverarbeitungseinrichtung (16);
wobei der während der Ausgangsbearbeitung der landwirtschaftlichen Nutzfläche (102) aufgezeichnete Fahrweg (24) bei der Folgebearbeitung der landwirtschaftlichen Nutzfläche (102) durch die elektronische Anzeige- und Bedieneinheit (12) optisch abgebildet und/oder zur Erzeugung von optischen Navigationshinweisen (36) verwendet wird.

8. Verfahren nach einem der vorstehenden Ansprüche,
**gekennzeichnet durch** den Schritt:
- nachträgliches Modifizieren von aufgezeichneten Steuerungsinformationen zu zumindest einzelnen während der Ausgangsbearbeitung der landwirtschaftlichen Nutzfläche (102) umgesetzten Steuerungsmaßnahmen;
wobei die nachträglich modifizierten Steuerungsinformationen zu zumindest einzelnen während der Ausgangsbearbeitung der landwirtschaftlichen Nutzfläche (102) umgesetzten Steuerungsmaßnahmen durch die elektronische Anzeige- und Bedieneinheit (12) bei einer Folgebearbeitung der landwirtschaftlichen Nutzfläche (102) mit dem landwirtschaftlichen Arbeitsgerät (20) verwendet werden.

9. Verfahren nach Anspruch 8,
**dadurch gekennzeichnet, dass** das nachträgliche Modifizieren von aufgezeichneten Steuerungsinformationen zu zumindest einzelnen während der Ausgangsbearbeitung der landwirtschaftlichen Nutzfläche (102) umgesetzten Steuerungsmaßnahmen ein Ändern, Löschen und/oder Hinzufügen von Steuerungsinformationen umfasst.

10. Verfahren nach einem der vorstehenden Ansprüche,
**dadurch gekennzeichnet, dass**
- das landwirtschaftliche Arbeitsgerät (20) eine Streumaschine, insbesondere ein Düngerstreuer, ist und die Bearbeitung der landwirtschaftlichen Nutzfläche (102) die Ausbringung von Streugut betrifft;
- das landwirtschaftliche Arbeitsgerät (20) ein Spritzgerät, insbesondere eine Feldspritze, ist und die Bearbeitung der landwirtschaftlichen Nutzfläche (102) die Ausbringung von Spritzflüssigkeit betrifft; oder
- das landwirtschaftliche Arbeitsgerät (20) eine Sämaschine ist und die Bearbeitung der landwirtschaftlichen Nutzfläche (102) die Ausbringung von Saatgut betrifft.

11. System (10) zum Unterstützen eines Gerätebedieners bei der Bearbeitung einer landwirtschaftlichen Nutzfläche (102), mit
- einer elektronischen Datenverarbeitungseinrichtung (16), welche dazu eingerichtet ist, Steuerungsinformationen zu Steuerungsmaßnahmen aufzuzeichnen, welche von einem landwirtschaftlichen Arbeitsgerät (20) während einer Ausgangsbearbeitung der landwirtschaftlichen Nutzfläche (102) umgesetzt werden; und
- einer Anzeige- und Bedieneinheit (12), welche dazu eingerichtet ist, aufgezeichnete Steuerungsinformationen zu zumindest einzelnen während der Ausgangsbearbeitung der landwirtschaftlichen Nutzfläche (102) umgesetzten Steuerungsmaßnahmen bei einer Folgebearbeitung der landwirtschaftlichen Nutzfläche (102) mit einem landwirtschaftlichen Arbeitsgerät (20) zu verwenden;
**dadurch gekennzeichnet, dass** das System (10) dazu eingerichtet ist, das Verfahren zum Unterstützen eines Gerätebedieners nach einem der Ansprüche 1 bis 10 auszuführen.

12. System (10) nach Anspruch 11,
**dadurch gekennzeichnet, dass** die elektronische Datenverarbeitungseinrichtung (16) dazu eingerichtet ist,
- ein optisches Anzeigen der aufgezeichneten Steuerungsinformationen zu zumindest einzelnen während der Ausgangsbearbeitung der landwirtschaftlichen Nutzfläche (102) umgesetzten Steuerungsmaßnahmen bei der Folgebearbeitung der landwirtschaftlichen Nutzfläche (102) durch die elektronische Anzeige- und Bedieneinheit (12) zu veranlassen; und/oder
- eine Umsetzung zumindest einzelner während der Ausgangsbearbeitung der landwirtschaftlichen Nutzfläche (102) umgesetzter Steuerungsmaßnahmen durch das landwirtschaftliche Arbeitsgerät (20) bei der Folgebearbeitung der landwirtschaftlichen Nutzfläche (102), insbesondere selbsttätig oder nach einer manuellen Auswahl des Gerätebedieners, zu veranlassen.

13. Landwirtschaftliches Arbeitsgerät (20), mit
- einem System (10), welches eine elektronische Datenverarbeitungseinrichtung (16) und eine elektronische Anzeige- und Bedieneinheit (12) umfasst;
**dadurch gekennzeichnet, dass** das System (10) nach einem der Ansprüche 11 oder 12 ausgebildet ist.

## Claims

1. Method for supporting an implement operator in working an agricultural area (102), comprising the steps of:
- recording control information relating to control measures which are implemented by an agricultural implement (20) during initial working of the agricultural area (102), the control information relating to the control measures being recorded by an electronic data processing device (16);
- recording, by the electronic data processing device (16), georeferenced measure positions (26a-26q) of the agricultural implement (20) when implementing control measures during the initial working of the agricultural area (102); and
- using, by an electronic display and control unit (12), recorded control information relating to at least individual control measures implemented during the initial working of the agricultural area (102) in subsequent working of the agricultural area (102) using an agricultural implement (20);
**characterized in that** recorded control information relating to at least individual control measures implemented during the initial working of the agricultural area (102) is visually and spatially displayed during the subsequent working of the agricultural area (102) via an information overview (30) associated with the measure position (26a-26q) on a display, in the form of a touchscreen, of the electronic display and control unit (12), preferably on a displayed map (22), at its particular georeferenced measure position (26a-26q) when the implement operator selects a measure position (26a-26q) by touching the display at the measure position (26a-26q) to be selected.

2. Method according to claim 1,
**characterized in that** the agricultural implement (20) which implements the control measures during the initial working of the agricultural area (102) is the same agricultural implement (20) by means of which the subsequent working of the agricultural area (102) is also carried out.

3. Method according to claim 1 or 2,
**characterized in that** recorded control information relating to at least individual control measures implemented during the initial working of the agricultural area (102) is visually displayed by the electronic display and control unit (12) during the subsequent working of the agricultural area (102).

4. Method according to any of the preceding claims,
**characterized by** the step of:
- recording the sequence of the control measures which are implemented by the agricultural implement (20) during the initial working of the agricultural area (102), the sequence being recorded by the electronic data processing device (16);
the recorded measure positions (26a-26q) for at least individual control measures implemented during the initial working of the agricultural area (102) are visually and spatially displayed in the recorded sequence, preferably on a displayed map (22), by the electronic display and control unit (12) during the subsequent working of the agricultural area (102).

5. Method according to any of the preceding claims,
**characterized in that,** on the basis of control information relating to control measures which was recorded during the initial working of the agricultural area (102), implementation of at least individual control measures implemented during the initial working of the agricultural area (102) is initiated by the agricultural implement (20) during the subsequent working of the agricultural area (102), in particular automatically or by a manual selection by the implement operator.

6. Method according to any of the preceding claims,
**characterized in that** recording control information relating to control measures comprises storing the control information on an internal data memory of the electronic data processing device (16) and/or an external data memory,
the stored control information being retrieved from the internal data memory of the electronic display and control unit (12) and/or the external data memory by the electronic data processing device (16) before the recorded control information relating to at least individual control measures implemented during the initial working is used in the subsequent working.

7. Method according to any of the preceding claims,
**characterized by** the step of:
- recording, by the electronic data processing device (16), the travel path (24) of the agricultural implement (20) during the initial working of the agricultural area (102);
the travel path (24) recorded during the initial working of the agricultural area (102) being visually displayed and/or used to generate visual navigation instructions (36) by the electronic display and control unit (12) during the subsequent working of the agricultural area (102).

8. Method according to any of the preceding claims,
**characterized by** the step of:
- subsequently modifying recorded control information relating to at least individual control measures implemented during the initial working of the agricultural area (102);
the subsequently modified control information relating to at least individual control measures implemented during the initial working of the agricultural area (102) being used by the electronic display and control unit (12) in subsequent working of the agricultural area (102) using the agricultural implement (20).

9. Method according to claim 8,
**characterized in that** subsequently modifying recorded control information relating to at least individual control measures implemented during the initial working of the agricultural area (102) comprises changing, deleting and/or adding control information.

10. Method according to any of the preceding claims,
**characterized in that**
- the agricultural implement (20) is a spreading machine, in particular a fertilizer spreader, and the working of the agricultural area (102) involves the application of spreading material;
- the agricultural implement (20) is a sprayer, in particular a field sprayer, and the working of the agricultural area (102) involves the application of spray liquid; or
- the agricultural implement (20) is a seed drill and the working of the agricultural area (102) involves the application of seed.

11. System (10) for supporting an implement operator in the working of an agricultural area (102), comprising
- an electronic data processing device (16) which is designed to record control information relating to control measures which are implemented by an agricultural implement (20) during initial working of the agricultural area (102); and
- a display and control unit (12) which is designed to use recorded control information relating to at least individual control measures implemented during the initial working of the agricultural area (102) in subsequent working of the agricultural area (102) using an agricultural implement (20);
**characterized in that** the system (10) is designed to carry out the method for supporting an implement operator according to any of claims 1 to 10.

12. System (10) according to claim 11,
**characterized in that** the electronic data processing device (16) is designed to
- initiate visual display, by the electronic display and control unit (12), of the recorded control information relating to at least individual control measures implemented during the initial working of the agricultural area (102) during the subsequent working of the agricultural area (102); and/or
- initiate implementation of at least individual control measures implemented during the initial working of the agricultural area (102) by the agricultural implement (20) during the subsequent working of the agricultural area (102), in particular automatically or according to a manual selection by the implement operator.

13. Agricultural implement (20), comprising
- a system (10) which comprises an electronic data processing device (16) and an electronic display and control unit (12);
**characterized in that** the system (10) is designed according to either claim 11 or claim 12.

## Revendications

1. Procédé permettant l'assistance à un opérateur d'appareil lors du traitement d'une surface agricole utile (102), comportant les étapes consistant à :
- enregistrer des informations de commande concernant des mesures de commande qui sont mises en oeuvre par un appareil de travail agricole (20) pendant un traitement initial de la surface agricole utile (102), dans lequel l'enregistrement des informations de commande concernant les mesures de commande est effectué par un dispositif de traitement de données électronique (16) ;
- enregistrer des positions de mesures géoréférencées (26a - 26q) de l'appareil de travail agricole (20) lors de la mise en oeuvre de mesures de commande pendant le traitement initial de la surface agricole utile (102) par le dispositif de traitement de données électronique (16) ; et
- utiliser des informations de commande enregistrées concernant au moins des mesures de commande individuelles mises en oeuvre pendant le traitement initial de la surface agricole utile (102) par une unité d'affichage et de manoeuvre électronique (12) lors d'un traitement ultérieur de la surface agricole utile (102) avec un appareil de travail agricole (20) ;
**caractérisé en ce que** des informations de commande enregistrées concernant au moins des mesures de commande individuelles mises en oeuvre pendant le traitement initial de la surface agricole utile (102) sont reproduites spatialement, de préférence optiquement sur une carte (22) représentée, lors du traitement ultérieur de la surface agricole utile (102) par l'intermédiaire d'un moyen pour l'aperçu d'informations (30) associé à la position de mesure (26a - 26q) sur un écran de l'unité d'affichage et de manoeuvre électronique (12) conçu comme un écran tactile à sa position de mesure géoréférencée (26a - 26q) respective lorsque l'opérateur d'appareil sélectionne une position de mesure (26a - 26q) par un effleurement de l'écran à la position de mesure (26a - 26q) à sélectionner.

2. Procédé selon la revendication 1,
**caractérisé en ce que** l'appareil de travail agricole (20) qui met en oeuvre les mesures de commande pendant le traitement initial de la surface agricole utile (102) est le même appareil de travail agricole (20) au moyen duquel est effectué également le traitement ultérieur de la surface agricole utile (102).

3. Procédé selon la revendication 1 ou 2,
**caractérisé en ce que** des informations de commande enregistrées concernant au moins des mesures de commande individuelles mises en oeuvre pendant le traitement initial de la surface agricole utile (102) sont affichées optiquement par l'unité d'affichage et de manoeuvre électronique (12) lors du traitement ultérieur de la surface agricole utile (102).

4. Procédé selon l'une des revendications précédentes,
**caractérisé par** l'étape consistant à :
- enregistrer la séquence des mesures de commande qui sont mises en oeuvre pendant le traitement initial de la surface agricole utile (102) au moyen de l'appareil de travail agricole (20), dans lequel l'enregistrement de la séquence est effectué par le dispositif de traitement de données électronique (16) ;
dans lequel les positions de mesures (26a - 26q) enregistrées concernant au moins des mesures de commande individuelles mises en oeuvre pendant le traitement initial de la surface agricole utile (102) sont représentées spatialement, de préférence optiquement sur une carte (22) représentée, lors du traitement ultérieur de la surface agricole utile (102) par l'unité d'affichage et de manoeuvre électronique (12) dans la séquence enregistrée.

5. Procédé selon l'une des revendications précédentes,
**caractérisé en ce que,** sur la base d'informations de commande concernant des mesures de commande qui ont été enregistrées pendant le traitement initial de la surface agricole utile (102), une mise en oeuvre d'au moins des mesures de commande individuelles mises en oeuvre pendant le traitement initial de la surface agricole utile (102) est déclenchée par l'appareil de travail agricole (20) lors du traitement ultérieur de la surface agricole utile (102), en particulier automatiquement ou par une sélection manuelle de l'opérateur d'appareil.

6. Procédé selon l'une des revendications précédentes,
**caractérisé en ce que** l'enregistrement
d'informations de commande concernant des mesures de commande comprend une mémorisation des informations de commande dans une mémoire de données interne du dispositif de traitement de données électronique (16) et/ou dans une mémoire de données externe,
dans lequel, avant l'utilisation des informations de commande enregistrées concernant au moins des mesures de commande individuelles mises en oeuvre pendant le traitement initial, lors du traitement ultérieur, une récupération des informations de commande mémorisées à partir de la mémoire de données interne de l'unité d'affichage et de manoeuvre électronique (12) et/ou de la mémoire de données externe est effectuée par le dispositif de traitement de données électronique (16).

7. Procédé selon l'une des revendications précédentes,
**caractérisé par** l'étape consistant à :
- enregistrer le trajet (24) de l'appareil de travail agricole (20) pendant le traitement initial de la surface agricole utile (102) au moyen du dispositif de traitement de données électronique (16) ;
dans lequel le trajet (24) enregistré pendant le traitement initial de la surface agricole utile (102) est reproduit optiquement par l'unité d'affichage et de manoeuvre électronique (12) lors du traitement ultérieur de la surface agricole utile (102) et/ou est utilisé pour la production d'indications de navigation optiques (36).

8. Procédé selon l'une des revendications précédentes,
**caractérisé par** l'étape consistant à :
- modifier ultérieurement des informations de commande enregistrées concernant au moins des mesures de commande individuelles mises en oeuvre pendant le traitement initial de la surface agricole utile (102) ;
dans lequel les informations de commande modifiées ultérieurement concernant au moins des mesures de commande individuelles mises en oeuvre pendant le traitement initial de la surface agricole utile (102) sont utilisées par l'unité d'affichage et de manoeuvre électronique (12) lors d'un traitement ultérieur de la surface agricole utile (102) avec l'appareil de travail agricole (20).

9. Procédé selon la revendication 8,
**caractérisé en ce que** la modification ultérieure d'informations de commande enregistrées concernant au moins des mesures de commande individuelles mises en oeuvre pendant le traitement initial de la surface agricole utile (102) comprend un changement, une suppression et/ou un ajout d'informations de commande.

10. Procédé selon l'une des revendications précédentes,
**caractérisé en ce que**
- l'appareil de travail agricole (20) est un épandeur, en particulier un épandeur d'engrais, et le traitement de la surface agricole utile (102) concerne l'épandage de produit d'épandage ;
- l'appareil de travail agricole (20) est un appareil de pulvérisation, en particulier un pulvérisateur agricole, et le traitement de la surface agricole utile (102) concerne l'épandage de liquide de pulvérisation ; ou
- l'appareil de travail agricole (20) est un semoir et le traitement de la surface agricole utile (102) concerne l'épandage de semences.

11. Système (10) permettant l'assistance à un opérateur d'appareil lors du traitement d'une surface agricole utile (102), comportant
- un dispositif de traitement de données électronique (16) qui est configuré pour enregistrer des informations de commande concernant des mesures de commande qui sont mises en oeuvre par un appareil de travail agricole (20) pendant un traitement initial de la surface agricole utile (102) ; et
- une unité d'affichage et de manoeuvre (12) qui est configurée pour utiliser des informations de commande enregistrées concernant au moins des mesures de commande individuelles mises en oeuvre pendant le traitement initial de la surface agricole utile (102) lors d'un traitement ultérieur de la surface agricole utile (102) avec un appareil de travail agricole (20) ;
**caractérisé en ce que** le système (10) est configuré pour exécuter le procédé permettant l'assistance à un opérateur d'appareil selon l'une des revendications 1 à 10.

12. Système (10) selon la revendication 11,
**caractérisé en ce que** le dispositif
de traitement de données électronique (16) est configuré pour
- provoquer un affichage optique, par l'unité d'affichage et de manoeuvre électronique (12), des informations de commande enregistrées concernant au moins des mesures de commande individuelles mises en oeuvre pendant le traitement initial de la surface agricole utile (102) lors du traitement ultérieur de la surface agricole utile (102) ; et/ou
- provoquer une mise en oeuvre d'au moins certaines mesures de commande mises en oeuvre pendant le traitement initial de la surface agricole utile (102) au moyen de l'appareil de travail agricole (20) lors du traitement ultérieur de la surface agricole utile (102), en particulier automatiquement ou après une sélection manuelle de l'opérateur d'appareil.

13. Appareil de travail agricole (20), comportant
- un système (10) qui comprend un dispositif de traitement de données électronique (16) et une unité d'affichage et de manoeuvre électronique (12) ;
**caractérisé en ce que** le système (10) est conçu selon l'une des revendications 11 ou 12.
